# EUROPEAN PATENT SPECIFICATION

(11) **EP 1 300 620 B1**
(45) Date of publication and mention of the grant of the patent: **30.04.2008**
(21) Application number: 02707224.8
(22) Date of filing: 28.03.2002
(51) Int. Cl.: F16L 11/04, C08L 23/20, C08L 21/00

(54) **HOSE MADE OF THERMOPLASTIC ELASTOMER**
SCHLAUCH AUS THERMOPLASTISCHEM ELASTOMER
TUYAU FABRIQUE EN ELASTOMERE THERMOPLASTIQUE

(30) Priority: 30.03.2001 JP 2001100014
(43) Date of publication of application: 09.04.2003
(73) Proprietor: Mitsui Chemicals, Inc., Tokyo (JP)
(72) Inventor: HONMA, Kiyoshi, c/o MITSUI CHEMICALS, INC., Ichihara-shi, Chiba 299-0108 (JP); SAKAMAKI, Noboru, c/o MITSUI CHEMICALS, INC., Ichihara-shi, Chiba 299-0108 (JP)
(74) Representative: Cresswell, Thomas Anthony
(86) International application number: PCT/JP2002/003082
(87) International publication number: WO 2002/081958

(56) References cited:
- EP-A- 0 556 843
- WO-A1-98/20068
- JP-A- 9 328 588
- JP-A- 10 287 776
- JP-A- 11 315 965
- JP-A- 2000 028 051
- US-A- 4 146 591
- US-A- 5 910 544

## Description

### FIELD OF THE INVENTION

The present invention relates to a hose comprising a thermoplastic elastomer, more particularly to a vulcanized rubber hose suitable as an automotive water hose of excellent heat resistance.

### BACKGROUND ART

US 5,910,544 describes a thermoplastic elastomer composition comprising a polyamide, a rubber composition and a cross-linking agent. US 4,146,591 describes a process for producing a 4-methyl-1-pentene copolymer composition, comprising polymerizing 4-methyl-1-pentene to form a polymer or copolymer, then copolymerising chat product to form a rubbery copolymer of about 30 to about 70 % by weight 4-methyl-1-pentene.

Vulcanized rubber hoses have good flexibility and heat resistance, and are widely used as various automotive hoses and industrial hot-water hoses and steam hoses.

Production of the vulcanized rubber hoses, however, necessarily comprises multiple steps of kneading various compounding chemicals, extrusion, braiding and vulcanization, and therefore requires a long time. Moreover, waste materials by the molding and used molded products are difficult to recycle, causing waste problems. The vulcanized rubber hose, when used as an automotive water hose, can cause other problems such as electrical corrosion resulting from carbon black used as a reinforcing agent, formation of a salt by zinc oxide compounded, and hindrance to valve action by the salt formation. Also, recent movements for fuel saving and environmental friendliness in the automobile industry have created trends of lightweight automotive parts.

To deal with the above problems, thermoplastic elastomers have been studied for use in place of the vulcanized .. rubbers, but no thermoplastic elastomers have been obtained that are readily moldable and recyclable, excellent in heat resistance, water resistance and mechanical characteristics, and can provide hoses having low specific gravities.

Accordingly the advent of thermoplastic elastomers capable of providing hoses that are readily moldable and recyclable and are excellent in heat resistance, water resistance and mechanical characteristics, and hoses of the thermoplastic elastomers has been expected.

The present invention has an object of providing a thermoplastic elastomer hose that is readily moldable and recyclable, excellent in heat resistance, water resistance and mechanical characteristics, and has a low specific gravity.

### SUMMARY OF THE INVENTION

The hose according to the present invention comprises a thermoplastic elastomer having a softening temperature of 160°C or above as measured by a TMA softening temperature measuring apparatus, elongation at break of at least 200% as determined at a testing rate of 100 mm/min, initial flexural modulus of from 20 to 700 MPa as measured at a testing rate of 2 mm/min, and a volume change of -2 to +10% after 168 hours of soaking in a 50%-ethylene glycol aqueous solution at 100°C.

The thermoplastic elastomer hose comprises an olefin thermoplastic elastomer obtainable by molding an olefin thermoplastic elastomer comprising:
15 to 95 parts by mass of an olefin resin (A), and
5 to 85 parts by mass of a crosslinked rubber (B), wherein the components (A) and (B) total 100 parts by mass, wherein
   50 to 97 % by mass of the olefin resin (A) is a 4-methyl-1-pentene polymer (A1),
   the polymer (A1) being a 4-methyl-1-pentene homopolymer and/or a 4-methyl-1-pentene/α-olefin random copolymer containing 80 to 99.9 % by mass of 4-methyl-1-pentene and 0.1 to 20 % by mass of an α-olefin of 2 to 20 carbon atoms.

Preferably, the crosslinked rubber (B) is a crosslinked product of a peroxide-crosslinkable olefin copolymer rubber.

The hose comprising the thermoplastic elastomer of the invention is suitable as an automotive water hose.

### BEST MODE TO CARRY OUT THE INVENTION

The hose comprising the thermoplastic elastomer of the invention will be described in detail hereinafter.

The thermoplastic elastomer hose is obtainable by molding an olefin thermoplastic elastomer containing
the olefin resin (A), and the crosslinked rubber (B).

These components of the thermoplastic elastomer are described first.

### Olefin Resin (A)

The olefin resin (A) for use in the invention contains the 4-methyl-1-pentene polymer (A1) in 50 to 97 % by mass and an olefin resin (A2) which is other than the 4-methyl-1-pentene polymer (A1) in 3 to 50 % by mass.

Preferably, the olefin resin (A2) is a peroxide-decomposable, olefin resin.

### [4-Methyl-1-Pentene Polymer (A1)]

The 4-methyl-1-pentene polymer (A1) is a 4-methyl-1-pentene homopolymer or a 4-methyl-1-pentene/α-olefin random copolymer containing 80 to 99.9 % by mass, preferably 90 to 99.9 % by mass of 4-methyl-1-pentene and 0.1 to 20 % by mass, preferably 0.1 to 10 % by mass of an α-olefin of 2 to 20, preferably 6 to 20 carbon atoms.

In the case of the 4-methyl-1-pentene/α-olefin random copolymer, the α-olefin copolymerized with 4-methyl-1-pentene is an α-olefin of 2 to 20, preferably 6 to 20 carbon atoms, such as ethylene, propylene, 1-butene, 1-hexene, 1-octene, 1-decene, 1-dodecene, 1-tetradecene, 1-hexadecene, 1-octadecene or 1-eicosene. For copolymerization with 4-methyl-1-pentene, these α-olefins may be used singly or two or more kinds may be used in combination.

When the content of the copolymerization component is in the above range, the resulting thermoplastic elastomer can have more superior heat resistance.

The 4-methyl-1-pentene polymer (A1) ideally has a melt flow rate (MFR: ASTM D1238, 260°C, 5.0 kg load) of 0.1 to 200 g/10 min, preferably 1 to 150 g/10 min.

The 4-methyl-1-pentene polymer (A1) may be a commercially available product, such as Mitsui Chemicals Inc. products: TPXMX001, MX002, MX004, MX021, MX321, RT18 and DX845 (trademark). Other companies' 4-methyl-1-pentene polymers are also preferable to use if they meet the above conditions.

The 4-methyl-1-pentene polymer (A1) may be used individually or two or more kinds may be used in combination.

The 4-methyl-1-pentene polymer (A1) plays a role to improve in particular the heat resistance of the thermoplastic elastomer hose of the invention.

### [Olefin Resin (A2)]

The olefin resin (A2) for use in the invention is an olefin resin other than the 4-methyl-1-pentene polymer (A1), and comprises a high-molecular-weight solid product obtained by homopolymerization or copolymerization of at least one monoolefin by either a high-pressure process or a low-pressure process.

Examples of the olefin resin (A2) include isotactic or syndiotactic monoolefin homopolymer or copolymer resins. These representative resins are commercially available.

Examples of suitable raw olefins for the olefin resin (A2) include α-olefins of 2 to 12, preferably 2 to 10 carbon atoms, such as ethylene, propylene, 1-butene, 1-pentene, 1-hexene, 1-octene, 1-decene, 2-methyl-1-propene, 3-methyl-1-pentene, 4-methyl-1-pentene and 5-methyl-1-hexene. These olefins may be used either individually or 2 or more kinds may be used as a mixture.

The polymerization may be carried out by any mode, randomly or blockwise, as long as it can produce resin-like products.

The olefin resin (A2) may be used singly or two or more kinds may be used in combination.

The olefin resin (A2) is preferably peroxide-decomposable olefin resin.

Particularly preferably, the peroxide-decomposable olefin resin is a propylene polymer, such as a propylene homopolymer, a propylene/ethylene block copolymer, a propylene/ethylene random copolymer or a propylene/ethylene/butene random copolymer.

The olefin resin (A2) for use in the invention ideally has a melt flow rate (MFR: ASTM D1238-65T, 230°C) of 0.01 to 1000 g/10 min, preferably 0.05 to 500 g/10 min.

The olefin resin (A2) plays a role to improve dispersion of the crosslinked rubber (B) and the 4-methyl-1-pentene polymer (A1) and to enhance flowability and mechanical strength of the thermoplastic elastomer used in the invention.

### Crosslinked Rubber (B)

The crosslinked rubber (B) for use in the invention can be a crosslinked rubber of known crosslinkable raw rubber and is not limited. Preferably, the crosslinked rubber (B) is a crosslinked product of a peroxide-crosslinkable olefin copolymer rubber whose raw rubber is preferably a conventional ethylene/α-olefin/non-conjugated polyene copolymer rubber or ethylene/α-olefin copolymer rubber.

The raw rubber is preferably an ethylene/α-olefin/non conjugated polyene copolymer rubber, and is particularly preferably an ethylene/propylene/non-conjugated diene rubber having the following properties.

The ethylene/propylene/non-conjugated diene rubber has a molar ratio of contents of structural units derived from ethylene to contents of structural units derived from propylene [ethylene/propylene (molar ratio)] of 30/70 to 90/10, preferably 50/50 to 85/15, an iodine value of 1 to 40 g/100 g, preferably 3 to 30 g/100 g, and an intrinsic viscosity [n] determined at 135°C in decalin (decahydronaphthalene) of 0.8 to 6 dl/g, preferably 1 to 5 dl/g.

Examples of the non-conjugated polyene include chain non-conjugated dienes, such as 1,4-hexadiene, 3-methyl-1,4-hexadiene, 4-methyl-1,4-hexadiene, 5-methyl-1,4-hexadiene, 4,5-dimethyl-1,4-hexadiene and 7-methyl-1,6-octadiene;
cyclic non-conjugated dienes, such as methyltetrahydroindene, 5-ethylidene-2-norbornene, 5-methylene-2-norbornene, 5-isopropylidene-2-norbornene, 5-vinylidene-2-norbornene, 6-chloromethyl-5-isopropenyl-2-norbornene and dicyclopentadiene; and
trienes, such as 2,3-diisopropylidene-5-norbornene, 2-ethylidene-3-isopropylidene-5-norbornene and 2-propenyl-2,2-norbornadiene. Of these, preferable are 5-ethylidene-2-norbornene, 5-vinylidene-2-norbornene and dicyclopentadiene. The non-conjugated polyenes may be used either individually or in combination of two or more kinds.

The crosslinked rubber (B) may be used singly or two or more kinds may be used in combination.

### Other Components

Known additives, such as softeners, inorganic fillers and carbon blacks, may be according to necessity compounded in the thermoplastic elastomer in addition to the olefin resin (A) [the 4-methyl-1-pentene polymer (A1) and the olefin resin (A2) other than the 4-methyl-1-pentene polymer (A1)] and the crosslinked rubber (B) within limits not detrimental to the object of the present invention.

The softeners employable in the invention are those commonly used in rubbers.

Specific examples of the softeners include:
petroleum substances, such as process oils, lubricating oils, paraffins, fluid paraffins, petroleum asphalts and vaselines;
coal tars, such as coal tars and coal tar pitches;
fatty oils, such as castor oil, linseed oil, colza oil, soybean oil and coconut oil;
waxes, such as tall oils, beeswaxes, carnauba waxes and lanolins;
fatty acids, such as ricinoleic acid, palmitic acid, stearic acid, barium stearate and calcium stearate, and metal salts of these acids;
synthetic polymer materials, such as petroleum resins, coumarone-indene resins and atactic polypropylenes;
ester plasticizers, such as dioctyl phthalate, dioctyl adipate and dioctyl sebacate;
microcrystalline waxes, rubber substitutes (factices), synthetic olefin oils, liquid polybutadienes, modified liquid polybutadienes and liquid Thiokol

In the invention, the softener is ideally used in a proportion of 100 parts by mass or less, preferably 80 parts by mass or less, more preferably 60 parts by mass or less based on 100 parts by mass in total of the 4-methyl-1-pentene polymer (A1), the olefin resin (A2) and the crosslinked rubber (B). When the softener is used in the above proportion, the resulting thermoplastic elastomer can exhibit an excellent flowability in the molding and the hose obtained therefrom does not suffer lowering in mechanical properties.

In the invention, the softener may be added at the time of production of the thermoplastic elastomer or may have been mixed with the raw rubber for oil extension.

Examples of the inorganic fillers for use in the invention include calcium carbonate, calcium silicate, clays, kaolins, talcs, silicas, diatomaceous earths, powdered mica, asbestos, aluminas, barium sulfate, aluminum sulfate, calcium sulfate, basic magnesium carbonate, molybdenum disulfide, graphites, glass fibers, glass beads, Shirasu balloons, basic magnesium sulfide whiskers, calcium titanate whiskers and aluminum borate whiskers.

In the invention, the inorganic filler is ideally used in a proportion of 100 parts by mass or less, preferably 80 parts by mass or less based on 100 parts by mass in total of the 4-methyl-1-pentene polymer (A1), the olefin resin (A2) and the crosslinked rubber (B).

When the inorganic filler is used in the above proportion, the resulting thermoplastic elastomer can have excellent rubber elasticity and moldability and workability.

In the invention, conventional additives, such as heat stabilizers, anti-aging agents, weathering stabilizers, antistatic agents and lubricants (e.g., metallic soaps and waxes), may be added, to the thermoplastic elastomer within limits not detrimental to the object of the invention.

### Thermoplastic Elastomer

The thermoplastic elastomer used in the invention contains the olefin resin (A) which is the 4-methyl-1-pentenepolymer (A1) and the olefin resin (A2), the crosslinked rubber (B) and the optional additives, such as the softeners, the inorganic fillers and the carbon blacks.

The thermoplastic elastomer contains the crosslinked rubber (B) in a proportion of 5 to 85 parts by mass, preferably 10 to 85 parts by mass, and the 4-methyl-l-pentene polymer (A1) and the olefin resin (A2) in a proportion of 15 to 95 parts by mass in total, preferably 15 to 90 parts by mass in total, both based on 100 parts by mass in total of the 4-methyl-1-pentene polymer (A1), the olefin resin (A2) and the crosslinked rubber (B).

The 4-methyl-1-pentene polymer (A1) is contained in a proportion of 50 to 97 % by mass, preferably 55 to 95 % by mass, and the olefin resin (A2) is contained in a proportion of 3 to 50 % by mass, preferably 5 to 45 % by mass based on 100 % by mass in total of the 4-methyl-1-pentene polymer (A1) and the olefin resin (A2).

When the olefin resin (A) is contained in the above proportion, the resulting thermoplastic elastomer for hose can be excellent not only in mechanical characteristics but also in moldability and workability. The hose of the invention can be obtained from the thermoplastic elastomer.

When the crosslinked rubber (B) is contained in the above proportion, the resulting thermoplastic elastomer for hose can have superior flexibility, permanent set resistance and flexural fatigue resistance.

When the olefin resin (A) contains the 4-methyl-1-pentene polymer (A1) in the above proportion, the resulting thermoplastic elastomer for hose can be excellent in flexural modulus and heat resistance.

The thermoplastic elastomer of the invention is readily recyclable because, in addition to the inherent easy recyclability of the thermoplastic elastomers, it is prepared from an olefin raw material.

The thermoplastic elastomer may be obtained by mixing together the 4-methyl-1-pentene polymer (A1), the olefin resin (A2), a raw rubber for the crosslinked rubber (B) and the optional additives, such as the softeners and the inorganic fillers, and dynamically heat treating the mixture in the presence of a crosslinking agent.

The term "dynamically heat treating" used herein means that the mixture is kneaded in a molten state.

The thermoplastic elastomer for use in the invention can be obtained also by dynamically heat treating a mixture of the olefin resin (A2) and a raw rubber for the crosslinked rubber (B) in the presence of a crosslinking agent, thereby preparing a masterbatch, and dynamically heat treating the masterbatch and the 4-methyl-1-pentene polymer (A1). According to necessity, the additives, such as the softeners and the inorganic fillers, may be compounded with the masterbatch or added in the mixing of the masterbatch and the 4-methyl-1-pentene polymer (A1).

Examples of the crosslinking agent include those commonly used for thermosetting rubbers, such as organic peroxides, phenolic resins, sulfur, hydrosilicone compounds, amino resins, quinones, quinone derivatives, amine compounds, azo compounds, epoxy compounds and isocyanates. Of these crosslinking agents, organic peroxides are particularly preferable.

Examples of the organic peroxides employable in the invention include dicumyl peroxide, di-tert-butyl peroxide, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butylperoxy benzoate, tert-butyl perbenzoate, tert-butylperoxyisopropyl carbonate, diacetyl peroxide, lauroyl peroxide and tert-butylcumyl peroxide.

Of these, in view of odor and scorch stability, preferable are 2,5-dimethyl-2,5-di-(tert-butylperoxy)hexane, 2,5-dimethyl-2,5-di-(tert-butylperoxy)hexyne-3 and 1,3-bis(tert-butylperoxyisopropyl)benzene, and most preferred is 2,5-dimethyl-2,5-di-(tert-butylperoxy)hexane.

The organic peroxide is ideally used in an amount of 0.02 to 5 parts by mass, preferably 0.05 to 3 parts by mass based on 100 parts by mass in total of the materials to be treated: the 4-methyl-1-pentene polymer (A1), the olefin resin (A2) and a raw rubber for the crosslinked rubber (B). When the organic peroxide is used in the above proportion, the resulting thermoplastic elastomer for hose can be excellent in heat resistance, tensile properties, elastic recovery and impact resilience, mechanical strength and elongation.

In the invention, the crosslinking treatment with the organic peroxide may be accompanied by addition of a peroxy crosslinking auxiliary, such as sulfur, p-quinone dioxime, p,p'-dibenzoyl quinone dioxime, N-methyl-N-4-dinitrosoaniline, nitrosobenzene, diphenylguanidine or trimethylolpropane-N,N'-m-phenylene dimaleimide; or a polyfunctional methacrylate monomer, such as divinylbenzene, triallyl cyanurate, triallyl isocyanurate, ethylene glycol dimethacrylate, diethylene glycol dimethacrylate, polyethylene glycol dimethacrylate, trimethylolpropane trimethacrylate or allyl methacrylate; or a polyfunctional vinyl monomer, such as vinyl butyrate or vinyl acetate.

With the above compound used, uniform and proper crosslinking can be expected. In the invention, the polyfunctional methacrylate monomer is preferable, and particularly divinyl benzene, triallyl cyanurate and triallyl isocyanurate are preferable.

The polyfunctional methacrylate monomer is easy to handle, has good compatibility with the materials to be crosslinked: the main component, 4-methyl-1-pentene polymer (A1), the olefin resin (A2) and a raw rubber for the crosslinked rubber (B), and has a function of solubilizing the organic peroxide to work as a dispersant for the organic peroxide so that the crosslinking by heat treatment can be effected uniformly to give a thermoplastic elastomer well balanced in flowability and physical properties.

The crosslinking auxiliary or the compound, such as the polyfunctional vinyl monomer, is ideally used in an amount of 5 parts by mass or less, preferably 0.1 to 3 parts by mass based on 100 parts by mass in total of the materials to be treated.

A decomposition accelerator may be used to promote decomposition of the organic peroxide, and examples thereof include tertiary amines, such as triethylamine, tributylamine and 2,4,6-tri(dimethylamino)phenol, and naphthenates of aluminum, cobalt, vanadium, copper, calcium, zirconium, manganese, magnesium, zinc and mercury.

The dynamic heat treatment is preferably carried out in a closed apparatus, and further preferably in an atmosphere of an inert gas, such as nitrogen or carbon dioxide.

The heat treatment temperature ranges from the melting point of the olefin resin (A) [the 4-methyl-1-pentene polymer (A1) and the olefin resin (A2)] to 300°C, and usually in the range of 150 to 280°C, preferably 170 to 260°C. The kneading time is from 1 to 20 minutes, preferably 1 to 10 minutes. The shear force applied is from 10 to 50,000 sec⁻¹, preferably 100 to 20,000 sec⁻¹ in shear rate.

The kneading apparatus for use in the invention, which is preferably a closed type, can be a mixing mill, an intensive mixer (e.g., a Banbury mixer or a kneader), or a single- or twin-screw extruder, and is particularly preferably a twin-screw extruder.

According to the present invention, the thermoplastic elastomer comprising the 4-methyl-1-pentene polymer (A1), the olefin resin (A2) and the crosslinked rubber (B) can be obtained by the aforesaid dynamic heat treatment.

In the invention, that the rubbers in the thermoplastic elastomer are crosslinked means that when the thermoplastic elastomer is soaked in cyclohexane at 23°C for 48 hours for extraction, the ratio of the remaining rubbers amount to the mixed rubbers amount on percentage, which is otherwise understood as the percentage of the gel amount, is preferably 30 % by mass or more, more preferably 50 % by mass or more.

In the mixing of the 4-methyl-1-pentene polymer (A1), the olefin resin (A2) and the crosslinked rubber (B), the aforesaid additives, such as the softeners, the inorganic fillers, the carbon blacks, the heat stabilizers, the anti-aging agents, the weathering stabilizers, the antistatic agents and the lubricants (e.g., metallic soaps and waxes), may be added. The additives are preferably mixed together with the components (A1), (A2) and (B) by the dynamic heat treatment, which is carried out at a temperature not lower than the melting point of the 4-methyl-1-pentene polymer (A1). Specifically the heat treatment temperature is in the range of 240 to 300°C, preferably 240 to 270°C.

The thermoplastic elastomer of the invention ideally has a softening temperature of 160°C or above, preferably 170°C or above, more preferably 180°C or above.

The upper limit of the softening temperature in view of moldability and the like should be preferably 240°C, more preferably 230°C. The softening temperature is determined with a TMA softening temperature measuring apparatus by measuring a temperature at which penetration of a 49 g-loaded needle into a sample being heated at a rate of 20°C/min reaches 0.1 mm.

The thermoplastic elastomer for use in the invention has an elongation at break, as measured by a method defined in JIS K 6251 (testing rate: 100 mm/min), of at least 200%, preferably at least 250%. The greater elongation at break is the more preferable.

The thermoplastic elastomer for use in the invention has initial flexural modulus of from 20 to 700 MPa, preferably from 20 to 600 MPa, more preferably from 30 to 500 MPa. The initial flexural modulus is a value determined by a method defined in JIS K 7171 (testing rate: 2 mm/min).

The thermoplastic elastomer used in the invention is capable of forming a hose having a volume change of -2 to +10%, preferably 0 to +10% after 168 hours of soaking in a 50%-ethylene glycol aqueous solution at 100°C.

The thermoplastic elastomer for use in the invention ideally has a specific gravity of 0.83 to 0.89, preferably 0.83 to 0.88.

The thermoplastic elastomer, which is used in the invention as a raw material for various hoses, particularly for automotive water hoses, can also be used as a raw material for other products, such as automotive rack and pinion boots, constant velocity joint boots, dust covers, brake fluid reservoirs, washer tanks, temperature controls and air cleaner cases.

### Hose

The hose according to the present invention is obtainable by molding the thermoplastic elastomer.

The hose is readily moldable and recyclable, is excellent in heat resistance, water resistance and mechanical characteristics, and has a low specific gravity. The hose has exceptional heat resistance.

The hose, which is preferably used as an automotive water hose, has other utility as a reservoir hose, a ventilation hose, a vacuum hose, an air-injection hose, an air-cleaner hose, an industrial steam hose and an industrial hot-water hose

The hose of the invention can be produced by a conventional molding method, such as extrusion molding, injection molding, extrusion blow molding or injection blow molding.

### EFFECT OF THE INVENTION

The thermoplastic elastomer of the invention which preferably contains specific amounts of the olefin resin (A) [the 4-methyl-1-pentene polymer (A1) and the olefin resin (A2) other than the 4-methyl-1-pentene polymer (A1)] and the crosslinked rubber (B), is readily moldable and recyclable, has excellent heat resistance, water resistance and mechanical characteristics, and has a low specific gravity.

The thermoplastic elastomer hose of the invention comprises the aforesaid thermoplastic elastomer and therefore can be readily molded and recycled, has excellent heat resistance, water resistance and mechanical characteristics, and has a low specific gravity.

### EXAMPLES

The present invention will be illustrated by the following Examples, which in no way limit the scopes of the invention.

The physical properties of olefin thermoplastic elastomers obtained in Examples and Comparative Examples were measured by the following methods.

### [Methods for measuring physical properties]

### (1) Tensile strength

In accordance with the method of JIS K 6251, a dumbbell type test piece No. 7 was subjected to a tensile test at a rate of 100 mm/min to measure the stress under which the test piece was broken.

### (2) Elongation at break

In accordance with the method defined in JIS K 6251, a dumbbell type test piece No. 7 was stretched at a rate of 100 mm/min in a measuring environment of 23°C, and the nominal strain at break was measured.

### (3) Initial flexural modulus

In accordance with the method defined in JIS K 7171, a 4-mm thick sheet was supported with a distance between the supports in a measuring environment of 23°C, and a load was applied to the center at a rate of 2 mm/min to determine the flexural modulus.

### (4) Softening temperature

The softening temperature was determined with a TMA softening temperature measuring apparatus (produced by Du Pont K. K.) by measuring a temperature at which penetration of a 49 g-loaded needle into the thermoplastic elastomer being heated at a rate of 20°C/min reached 0.1 mm.

### (5) Coolant resistance

In accordance with the method defined in JIS D 2602, the thermoplastic elastomer was soaked in a 50%-ethylene glycol aqueous solution at 100°C ± 1°C for 168 hours, and changes in volume, elongation strength and elongation were measured.

### Example 1

By means of a Henschel mixer, the following were sufficiently mixed together:
25 parts by mass of pellets of a polypropylene homopolymer [MFR = 10 g/10 min (230°C, 2.16 kg load),
140 parts by mass of pellets of an oil-extended ethylene/propylene/5-ethylidene-2-norbornene (ENB) copolymer rubber [molar ratio of ethylene-derived units and propylene-derived units (ethylene/propylene) = 79/21, iodine value based on the ENB = 13, Mooney viscosity ML (1+4) at 125°C = 105, oil extension amount: 40 parts by mass of a mineral oil softener (PW-380™ produced by IDEMITSU KOSAN CO., LTD.) per 100 parts by mass of the rubber],
35 parts by mass of a post-addition mineral oil softener (aforesaid PW-380),
0.2 part by mass of an organic peroxide
[2,5-dimethyl-2,5-di-(tert-butylperoxy)hexane],
0.2 part by mass of divinylbenzene (DVB), and
0.1 part by mass of a phenolic anti-aging agent. The mixture was fed to a twin-screw extruder and dynamically heat treated under the following conditions, thereby preparing masterbatch pellets of thermoplastic elastomer.

### (Dynamic heat treatment conditions)

- Extruder: ZSK-53™ produced by WERNER & PFLEIDERER, screw diameter = 53 mm.
- Temperature setting: C1/C2/C3/C4/C5/D = 140/160/180/220/220/200 (°C).
- Maximum shear rate: 2800 (1/sec).
- Throughput: 50 (kg/h).

The thermoplastic elastomer masterbatch pellets, 50 parts by mass, were subsequently mixed together with 50 parts by mass of pellets of a 4-methyl-1-pentene polymer [TPX MX 002™ produced by Mitsui Chemicals, Inc.: 4-methyl-1-pentene content = 93 % by mass, content of mixed olefins of 16 carbon atoms and of 18 carbon atoms = 7 % by mass, MFR = 23 g/10 min (260°C, 5.0 kg load)] by a Henschel mixer. The mixture was fed to a twin-screw extruder and dynamically heat treated under the following conditions, thereby preparing pellets of thermoplastic elastomer for hose.

### (Dynamic heat treatment conditions)

- Extruder: ZSK-53™ produced by WERNER & PFLEIDERER, screw diameter = 53 mm.
- Temperature setting: C1/C2/C3/C4/C5/D =
   200/240/260/270/270/250 (°C).
- Maximum shear rate: 2000 (1/sec).
- Throughput: 60 (kg/h).

The above-obtained thermoplastic elastomer for hose contained the crosslinked rubber (B) in an amount of 31 % by mass, and the 4-methyl-1-pentene polymer (A1) and the olefin resin (A2) in a total amount of 69 % by mass based on 100 % by mass in total of the 4-methyl-1-pentene polymer (A1), the olefin resin (A2) and the crosslinked rubber (B). Based on the total 100 % by mass of the 4-methyl-1-pentene polymer (A1) and the olefin resin (A2), the contents of the 4-methyl-1-pentene polymer (A1) and of the olefin resin (A2) were 89 % by mass and 11 % by mass, respectively.

The pellets of thermoplastic elastomer for hose were injection molded into a given test piece, which was then subjected to measurement of tensile strength, elongation at break, initial flexural modulus and softening temperature by the above methods. Also, the thermoplastic elastomer was molded with a 45-mmø extruder at 280°C into a hose having an inner diameter of 20 mm and a radial thickness of 2 mm, from which a specified test piece was punched out and subjected to measurement of coolant resistances (changes in volume, tensile strength and elongation) by the above measuring method.

The results are shown in Table 1.

### Example 2

A thermoplastic elastomer for hose having a composition shown in Table 1 was obtained in the same manner as in Example 1, except that the components were added in different amounts.

The results of the measurements are shown in Table 1.

### Example 3

A thermoplastic elastomer for hose having a composition shown in Table 1 was obtained in the same manner as in Example 1, except that the components were added in different amounts.

The results of the measurements are shown in Table 1.

### Example 4

A thermoplastic elastomer for hose having a composition shown in Table 1 was obtained in the same manner as in Example 1, except that the components were added in different amounts.

The results of the measurements are shown in Table 1.

### Example 5

This Example was carried out in the same manner as in Example 1, except that a 4-methyl-1-pentene copolymer [TPX RT 18™ produced by Mitsui Chemicals, Inc.: 4-methyl-1-pentene content = 97 % by mass, C₁₀ olefin content: 3 % by mass, MFR: 26 g/10 min (260°C, 5.0 kg load)] was used as the 4-methyl-1-pentene polymer (A1).

The results of the measurements are shown in Table 1.

### Comparative Example 1

This Comparative Example was carried out in the same manner as in Example 1, except that use was made of thermoplastic elastomer pellets containing 95 parts by mass of the polypropylene homopolymer and 140 parts by mass of the oil-extended ethylene/propylene/5-ethylidene-2-norbornene copolymer rubber used in Example 1 but containing no TPX MX 002™ of Example 1.

The results of the measurements are shown in Table 2.

### Comparative Example 2

This Comparative Example was carried out in the same manner as in Example 1, except that TPX MX 002™alone was used as the 4-methyl-1-pentene polymer (A1).

The results of the measurements are shown in Table 2.

### Comparative Example 3

This Comparative Example was carried out in the same manner as in Example 1, except that a commercially available polyolefin thermoplastic elastomer TPO (MILASTOMER 8030N™ produced by Mitsui Chemicals, Inc.) alone was injection molded and extrusion molded at 240°C.

The results of the measurements are shown in Table 2.

### Comparative Example 4

This Comparative Example was carried out in the same manner as in Example 1, except that a commercially available polyamide thermoplastic elastomer TPAE (PEBAX 3533™ produced by Toray Industries Inc.) alone was injection molded and extrusion molded at 220°C.

The results of the measurements are shown in Table 2.

### Comparative Example 5

This Comparative Example was carried out in the same manner as in Example 1, except that a commercially available polyester thermoplastic elastomer TPEE (PELPRENE P30B™ produced by Toyobo Co., Ltd.) alone was injection molded and extrusion molded at 230°C.

The results of the measurements are shown in Table 2.

**Table 1**

| | | Example | | | | |
|---|---|---|---|---|---|---|
| | | 1 | 2 | 3 | 4 | 5 |
| Master batch *1 | parts by mass | 50 | 75 | 85 | 25 | 50 |
| TPX MX 002 | parts by mass | 50 | 25 | 15 | 75 | |
| TPX RT 18 | parts by mass | | | | | 50 |
| (A1)+(A2) content *2 | % by mass | 69 | 47 | 37 | 86 | 69 |
| Crosslinked rubber content *2 | % by mass | 31 | 53 | 63 | 14 | 31 |
| (A2) content *3 | % by mass | 11 | 26 | 40 | 4 | 11 |
| TPX MX 002 *3 | % by mass | 89 | 74 | 60 | 96 | 89 |
| Tensile strength | MPa | 9.5 | 8.0 | 7.6 | 11.7 | 10.7 |
| Elongation at break | % | 320 | 330 | 360 | 260 | 200 |
| Initial flexural modulus. | MPa | 186 | 69 | 32 | 340 | 274. |
| Softening temperature | °C | 197 | 165 | 162 | 218 | 199 |
| Coolant resistances *4 | | | | | | |
| Volume change | % | 0.3 | 0.1 | 0.1 | 0.6 | 0.2 |
| Tensile strength change | % | -4 | -4 | -2 | -4 | -7 |
| Elongation change | % | -8 | -9 | -6 | -13 | -10 |
| Specific gravity | - | 0.85 | 0.86 | 0.86 | 0.84 | 0.85 |

| | | | | | | |
|---|---|---|---|---|---|---|
| *1: Master batch compounding Oil-extended EPDM 140 parts by mass, mineral oil 34 parts by mass, polypropylene homopolymer 24 parts by mass, [2,5-dimethyl-2,5-di-(tert-butylperoxy)hexane] 0.2 part by mass, divinylbenzene (DVB) 0.2 part by mass and phenolic heat aging inhibitor 0.1 part by mass. *2: Content based on 100 % by mass of a total of components (A1), (A2) and (B). *3: Content based on 100 % by mass of a total of components (A1) and (A2). *4: After soaking in distilled water/ethylene glycol = 50/50 (v/v) at 100°C for 168 hours. | | | | | | |

**Table 2**

| | | Comparative Example. | | | | |
|---|---|---|---|---|---|---|
| | | 1 | 2 | 3 | 4 | 5 |
| (A1) + (A2) content *1 | % by mass | 49 | 0 | | | |
| Crosslinked rubber content *1 | % by mass | 51 | 0 | | | |
| (A2) content *2 | % by mass- | 100 | 0 | | | |
| TPX MX 002 *2 | % by mass | 0 | 100 | | | |
| MILASTOMER 8030N | Parts by mass | | | 100 | | |
| PEBAX 3533 | Parts by mass | | | | 100 | |
| PELPRENE P30B | Parts by mass | | | | | 100 |
| Tensile strength. | MPa | 12.8 | 15.7 | 12.3 | 34.4 | 30.7 |
| Elongation at break | % | 700 | 120 | 600 | 1010 | 1140 |
| Initial flexural modulus | MPa | 150 | 530 | 90 | 30 | 15 |
| Softening temperature | °C | 135 | 220 | 132 | 112 | 154 |
| Coolant resistances *3 | | | | | | |
| Volume change | % | 1.1 | 2.4 | 1.1 | 2.4 | 0.1 |
| Tensile strength change | % | -5 | -10 | 4 | -61 | -41 |
| Elongation change | % | -2 | -36 | 7 | -22 | -15 |
| Specific gravity | - | 0.91 | 0.83 | 0.89 | 1.01 | 1.05 |

| | | | | | | |
|---|---|---|---|---|---|---|
| *1: Content based on 100 % by mass of a total of components (A1), (A2) and (B). *2: Content based on 100 % by mass of a total of components (A1) and (A2). *3: After soaking in distilled water/ethylene glycol = 50/50 (v/v) at 100°C for 168 hours. | | | | | | |

## Claims

1. A hose obtainable by molding an olefin thermoplastic elastomer comprising:
15 to 95 parts by mass of an olefin resin (A), and
5 to 85 parts by mass of a crosslinked rubber (B), wherein the components (A) and (B) total 100 parts by mass, wherein 50 to 97 % by mass of the olefin resin (A) is a 4-methyl-1-pentene homopolymer and/or a 4-methyl-1-peatene/a-olefin random copolymer containing 80 to 99.9 % by mass of 4-methyl-1-pentene and 0.1 to 20 % by mass of an α-olefin of 2 to 20 carbon atoms, the thermoplastic elastomer having a softening temperature of 160 °C or above as measured by a TMA softening temperature measuring apparatus, an elongation at break of at least 200% as determined at a testing rate of 100 mm/min, an initial flexural modulus of from 20 to 700 MPa as measured at a testing rate of 2mm/min, and a volume change of -2 to +10% after 168 hours of soaking in a 50%-ethylene glycol aqueous solution at 100°C.

2. A hose according to claim 1, wherein the olefin resin (A) further comprises a peroxide-decomposable olefin resin.

3. A hose according to claim 1 or 2, wherein the crosslinked rubber (B) is a crosslinked product of a peroxide-crosslinkable olefin copolymer rubber.

4. A hose according to any one of claims 1 to 3, which is an automotive water hose.

## Patentansprüche

1. Schlauch, der durch Formung eines thermoplastischen Olefinelastomers erhältlich ist, umfassend:
15 bis 95 Masseteile eines Olefinharzes (A), und
5 bis 85 Masseteile eines quervernetzten Gummis (B), wobei die Komponenten (A) und (B) sich zu 100 Masseteilen aufsummieren, wobei 50 bis 97 Masse-% des Olefinharzes (A) ein 4-Methyl-1-penten-Homopolymer und/oder ein zufälliges 4-Methyl-1-penten/a-Olefin-Copolymer, welches 80 bis 99,9 Masse-% 4-Methyl-1-penten und 0,1 bis 20 Masse-% eines α-Olefins mit 2 bis 20 Kohlenstoffatomen enthält, sind, wobei das thermoplastische Elastomer eine Erweichungstemperatur von 160°C oder höher, gemessen mittels eines TMA Erweichungstemperaturmessgerät, eine Ausdehnung am Bruchpunkt von mindestens 200 %, bestimmt bei einer Untersuchungsgeschwindigkeit von 100 mm/min, ein Elastizitätsmodul zu Beginn von 20 bis 700 Mpa, gemessen bei einer Untersuchungsgeschwindigkeit von 2 mm/min, und eine Volumenänderung von -2 bis +10 % nach 168-stündigem Eintauchen in eine wässrige 50-%ige Ethylenglykol-Lösung bei 100 °C besitzt.

2. Schlauch gemäß Anspruch 1, wobei das Olefinharz (A) außerdem ein durch Peroxid abbaubares Olefinharz aufweist.

3. Schlauch gemäß Anspruch 1 oder 2, wobei der quervernetzte Gummi (B) ein quervernetztes Produkt eines mit Peroxid quervernetzbaren Olefin-Copolymer-Gummis ist.

4. Schlauch gemäß einem der Ansprüche 1 bis 3, der ein Wasserschlauch eines Automobils ist.

## Revendications

1. Tuyau que l'on peut obtenir par moulage d'un élastomère thermoplastique à base d'oléfines qui comprend :
- 15 à 95 parties en masse d'une résine d'oléfines (A),
- et 5 à 85 parties en masse d'un caoutchouc réticulé (B),
dans lequel les composants (A) et (B) font au total 100 parties en masse, et une fraction de 50 à 97 % en masse de la résine d'oléfines (A) est constituée d'un homopolymère de 4-méthyl-1-pentène et/ou d'un copolymère statistique de 4-méthyl-1-pentène et d'α-oléfine, comportant 80 à 99,9% en masse de 4-méthyl-pentène-1 et 0,1 à 20 % en masse d'une α-oléfine qui comporte 2 à 20 atomes de carbone,
lequel élastomère thermoplastique présente :
- une température de ramollissement, déterminée à l'aide d'un appareil de mesure de température de ramollissement par analyse thermo-mécanique, supérieure ou égale à 160 °C,
- un allongement à la rupture, déterminé à une vitesse d'essai de 100 mm/min, d'au moins 200 %,
- un module de flexion initial, déterminé à une vitesse d'essai de 2 mm/min, de 20 à 700 MPa,
- et une variation de volume de -2 à +10 % au bout de 168 heures de trempage dans une solution aqueuse à 50 % d'éthylèneglycol à 100 °C.

2. Tuyau conforme à la revendication 1, dans lequel la résine d'oléfines (A) comprend en outre une résine d'oléfines décomposable au moyen d'un peroxyde.

3. Tuyau conforme à la revendication 1 ou 2, dans lequel le caoutchouc réticulé (B) est un produit de réticulation d'un caoutchouc copolymère d'oléfines réticulable au moyen d'un peroxyde.

4. Tuyau conforme à l'une des revendications 1 à 3, lequel tuyau est un tuyau à eau pour automobile.
